# FASCICULE DE BREVET EUROPEEN

(11) **EP 3 404 903 B1**
(45) Date de publication et mention de la délivrance du brevet: **11.12.2019**
(21) Numéro de dépôt: 18172122.6
(22) Date de dépôt: 14.05.2018
(51) Int. Cl.: H04M 1/02, H04M 1/10, H04M 11/02

(54) **APPAREIL TÉLÉPHONIQUE**
TELEFONAPPARAT
TELEPHONE DEVICE

(30) Priorité: 15.05.2017 FR 1754241
(43) Date de publication de la demande: 21.11.2018
(73) Titulaire: HAGER SECURITY (SAS), FR-38920 Crolles (FR)
(72) Inventeur: ARGOUD PUY, Mikael, 38410 VAULNAVEYS LE HAUT (FR); BUIRET, Jean-Luc, 38400 ST MARTIN D'HERES (FR); GIORDANO, Jean, 38920 CROLLES (FR)
(74) Mandataire: Nuss, Laurent

(56) Documents cités:
- CH-A5- 677 051
- DE-B- 1 175 328
- US-A- 4 251 694

## Description

La présente invention concerne le domaine des appareils téléphoniques du type interphone.

La publication DE 202 03 650 U1 décrit un appareil téléphonique pour un montage mural qui comprend un socle et un combiné. Le combiné est maintenu sur le socle par des moyens de maintien comprenant un aimant de maintien disposé dans le socle et d'un disque en matériau ferromagnétique disposé dans le combiné. Par ailleurs, en position raccrochée l'aimant du socle peut coopérer avec deux capteurs magnéto résistifs disposés dans le combiné et relié à une carte électronique située également dans le combiné. En particulier, un premier capteur magnéto résistif est relié à un haut-parleur de sonnerie et un deuxième capteur magnéto résistif est relié à un haut-parleur de communication. Lorsque le combiné est en position raccrochée, le haut-parleur de sonnerie est activé et inversement lorsque le combiné est en position décrochée, le haut-parleur de sonnerie est désactivé. A l'inverse, lorsque le combiné est en position décroché, le haut-parleur de communication est activé et inversement lorsque le combiné est en position raccrochée, le haut-parleur de communication est désactivé. Toutefois, cet appareil téléphonique présente l'inconvénient d'utiliser deux haut-parleurs et deux capteurs magnéto résistifs. Par ailleurs, l'électronique de cet appareil téléphonique, c'est-à-dire les capteurs magnéto résistifs, les haut-parleurs, ainsi que la carte électronique sont disposés dans le combiné. Or, le combiné est un des éléments les plus fragiles de l'appareil téléphonique, en cas de détérioration accidentelle, le remplacement du combiné engendrera des coûts conséquents qui ne sont pas souhaitables.

La publication CH 677 051 A1 décrit un appareil téléphonique selon le préambule de la revendication 1 de la présente invention. Il est également fait référence aux documents DE 11 75 328 B et US 4 251 694 A.

La présente invention a pour but de pallier ces inconvénients.

A cet effet, l'invention concerne un appareil téléphonique comprenant un socle, un combiné, et des moyens de maintien pour maintenir le combiné sur le socle dans une position raccrochée, lesdits moyens de maintien comprenant au moins une structure aimantée de maintien disposée dans le combiné et une structure en matériau ferromagnétique doux disposée dans le socle, le combiné comprend au moins un haut-parleur,
la structure aimantée de maintien comprend un premier élément aimanté et un deuxième élément aimanté,
le premier élément aimanté et le deuxième élément aimanté ayant leurs pôles magnétiques respectifs inversés, et étant fixées à une distance l'un de l'autre à un élément de support,
en position raccrochée, la structure en matériau ferromagnétique doux est disposée en face de la structure aimantée de maintien pour être attirée par la structure aimantée de maintien,
le socle comprend une carte électronique à laquelle est intégré au moins un capteur magnétique pour coopérer avec la structure aimantée de maintien en position raccrochée,
en position raccrochée, la structure en matériau ferromagnétique doux est intercalée entre le capteur magnétique et la structure en matériau ferromagnétique doux,
et la structure en matériau ferromagnétique doux comprend une portion de guidage de lignes de champ magnétique pour guider les lignes de champ magnétique provenant de la structure aimantée de maintien en direction du capteur magnétique en position raccrochée.

L'invention sera mieux comprise, grâce à la description ci-après, qui se rapporte à plusieurs modes de réalisation préférés, donnés à titre d'exemples non limitatifs, et expliqués avec référence aux dessins schématiques annexés, dans lesquels :
la figure 1 est une vue en perspective en éclaté de l'appareil téléphonique selon l'invention,
la figure 2 est une vue de face de l'appareil téléphonique représenté à la figure 1 en position raccrochée,
la figure 3 est une vue en coupe selon un plan sécant A-A de l'appareil téléphonique représenté à la figure 2,
la figure 4 est une vue d'un détail A de la figure 3, et
la figure 5 est une vue en coupe schématique du capteur magnétique, de la structure en matériau ferromagnétique doux, et de la structure aimantée de maintien, illustrant les lignes de champ magnétique.

L'appareil téléphonique comprend un socle 1, un combiné 2, et des moyens de maintien pour maintenir le combiné 2 sur le socle 1 dans une position raccrochée R, lesdits moyens de maintien comprenant au moins une structure aimantée de maintien 3 disposée dans le combiné 2 et une structure en matériau ferromagnétique doux 4 disposée dans le socle 1, le combiné 2 comprend au moins un haut-parleur 5.

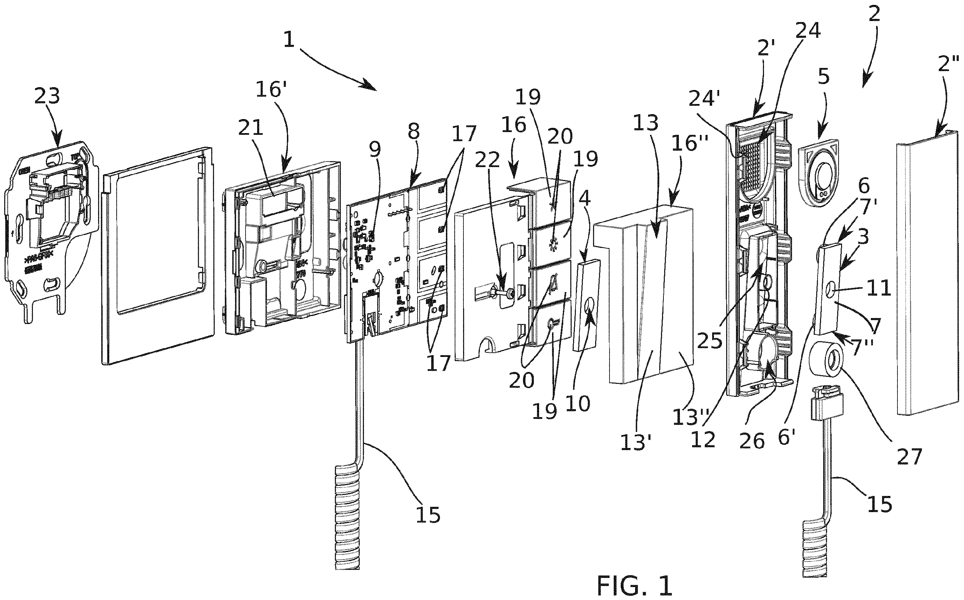

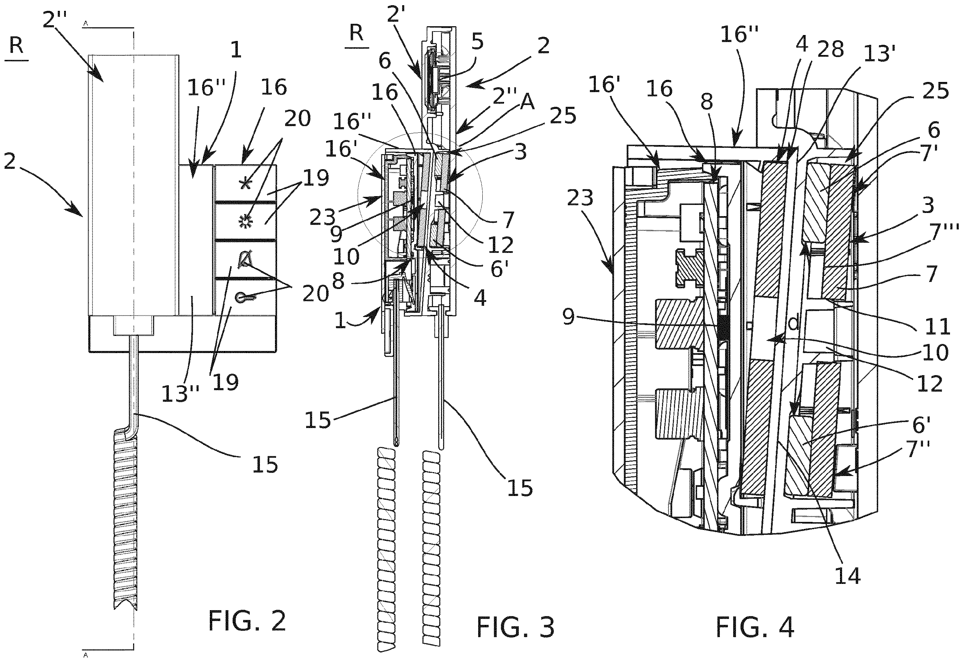

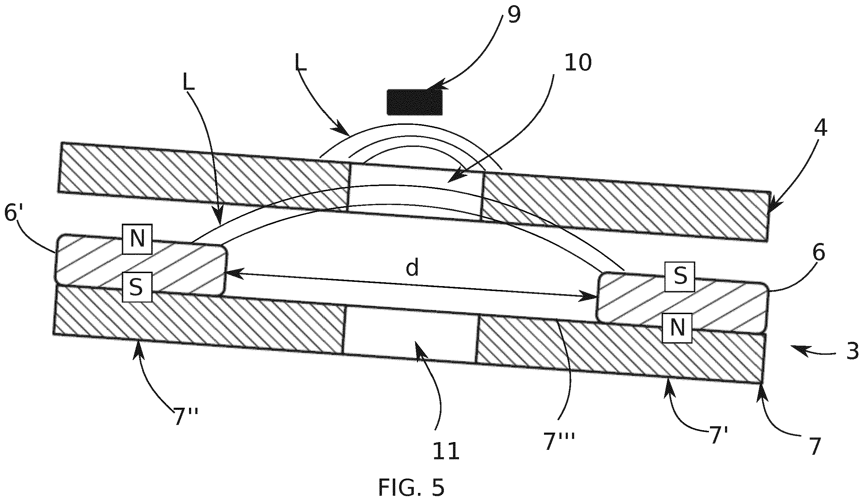

Conformément à l'invention, l'appareil téléphonique est caractérisé en ce que :
la structure aimantée de maintien 3 comprend un premier élément aimanté 6 et un deuxième élément aimanté 6' (figures 1, 3, 4 et 5),
le premier élément aimanté 6 et le deuxième élément aimanté 6' ayant leurs pôles magnétiques N, S respectifs inversés, et étant fixées à une distance d l'un de l'autre à un élément de support 7 (figures 4 et 5),
en position raccrochée R, la structure en matériau ferromagnétique doux 4 est disposée en face de la structure aimantée de maintien 3 pour être attirée par la structure aimantée de maintien 3 (figures 3, 4 et 5),
le socle 1 comprend une carte électronique 8 à laquelle est intégré au moins un capteur magnétique 9 pour coopérer avec la structure aimantée de maintien 3 en position raccrochée R (figures 3 et 4),
en position raccrochée R, la structure en matériau ferromagnétique doux 4 est intercalée entre le capteur magnétique 9 et la structure aimantée de maintien 3 (figures 3, 4 et 5),
et la structure en matériau ferromagnétique doux 4 comprend une portion de guidage 10 de lignes L de champ magnétique pour guider les lignes L de champ magnétique de la structure aimantée de maintien 3 en direction du capteur magnétique 9 en position raccrochée R (figures 1, 3, 4 et 5).

Avantageusement, cette configuration de l'appareil téléphonique selon l'invention permet en position raccrochée R, à la fois de maintenir le combiné 2 sur le socle 1 sous l'effet de l'attraction magnétique exercée par le premier élément aimanté 6 et le deuxième élément aimanté 6' de la structure aimantée de maintien 3 sur la structure en matériau ferromagnétique doux 4 et à la fois de guider les lignes L de champ magnétique créent par le premier élément aimanté 6 et le deuxième élément aimanté 6' en direction du capteur magnétique 9. En effet, la portion de guidage 10 permet de concentrer les lignes L de champ créées en direction du capteur magnétique 9. Plus particulièrement, la portion de guidage 10 forme un passage au niveau de la structure en matériau ferromagnétique doux 4 et permet ainsi aux lignes L de champ magnétique de traverser la structure en matériau ferromagnétique doux 4. Le capteur magnétique 9 peut ainsi coopérer avec la structure aimantée de maintien 3, c'est-à-dire que le capteur magnétique 9 peut détecter les lignes L de champ magnétique provenant de la structure aimantée de maintien 3. En outre, le maintien du combiné 2 sur le socle 1, en position raccrochée, est particulièrement efficace du fait de l'utilisation du premier élément aimanté 6 et du deuxième élément aimanté 6', soit de deux éléments aimantés 6, 6'.

Le capteur magnétique 9 peut être choisi parmi un capteur magnéto résistif, un capteur à effet Hall, un interrupteur REED ou similaire. Le capteur magnétique 9 est apte et destiné à détecter un champ magnétique.

L'appareil téléphonique selon l'invention peut être un interphone et préférentiellement, une unité intérieure d'interphone destinée à être reliée à une unité extérieure d'interphone.

L'appareil téléphonique selon l'invention peut préférentiellement faire partie d'une installation électrique, par exemple domestique. Par ailleurs, cet appareil téléphonique peut être relié au réseau électrique pour permettre notamment son alimentation électrique. A cet effet, la carte électronique 8 peut comprendre un élément de connexion (non représenté) apte et destiné à être connecté électriquement au réseau électrique.

L'appareil téléphonique selon l'invention peut être installé sur un support (non représenté) préférentiellement vertical, tel qu'un mur.

Préférentiellement, le premier élément aimanté 6 peut être un premier aimant permanent, le deuxième élément aimanté 6' peut être un deuxième aimant permanent, et l'élément de support 7 peut être une plaque en matériau ferromagnétique doux (figures 3, 4 et 5).

La structure aimantée de maintien 3 peut ainsi adopter une allure générale en forme de U (figure 5).

Plus particulièrement et comme l'illustre la figure 5, le premier aimant permanent peut être dipolaire et comprendre un pôle sud S orienté vers la structure en matériau ferromagnétique doux 4 et un pôle nord N orienté vers l'élément de support 7 et le deuxième aimant permanent peut être dipolaire et comprendre un pôle nord N orienté vers la structure en matériau ferromagnétique doux 4 et un pôle sud S orienté vers l'élément de support 7. Il en résulte que le premier élément aimanté 6 et le deuxième élément aimanté 6' ont leurs pôles magnétiques N, S respectifs inversés. Une configuration inversée peut également être possible. La direction des pôles peut préférentiellement être sensiblement orthogonale à la direction longitudinale de l'élément de support 7.

L'élément de support 7 peut être en fer doux. La plaque formant l'élément de support 7 peut être de forme sensiblement rectangulaire et de forme allongée comprenant deux extrémités opposées 7', 7". Le premier élément aimanté 6, préférentiellement sous forme du premier aimant permanent, peut être monté au niveau d'une des extrémités 7' et le deuxième élément aimanté 6', préférentiellement sous forme du deuxième aimant permanent, peut être monté au niveau de l'extrémité 7" opposée. Le premier élément aimanté 6 et le deuxième élément aimanté 6' peuvent être montés saillant sur une même face 7''' de l'élément de support 7. Cette plaque peut comprendre une ouverture centrale 11. Le rapport entre l'ouverture centrale 11 et la partie non ouverte de la plaque est préférentiellement compris entre 0.4 et 0.7. Par conséquent, l'ouverture centrale 11 peut présenter un diamètre de 8 millimètres et la plaque peut présenter une longueur de 15 millimètres. Dans l'exemple, illustrée l'ouverture centrale 11 présente une forme circulaire, toutefois cet exemple n'est pas limitatif et l'ouverture centrale 11 peut présenter diverses formes.

En position raccrochée R, la portion de guidage 10 et le capteur magnétique 9 peuvent être disposés en regard l'un de l'autre (figures 3, 4, et 5).

Cet agencement permet une détection optimale et précise des lignes L de champ magnétique créées par le premier élément aimanté 6 et le deuxième élément aimanté 6' au moyen du capteur magnétique 9.

Selon une première variante de réalisation de l'invention, la structure en matériau ferromagnétique doux 4 peut être constituée d'une plaque munie d'une ouverture centrale 10 correspondant à la portion de guidage (figures 1, 3, 4 et 5).

Cette ouverture centrale 10 est traversante. Cette ouverture centrale 10 doit préférentiellement être suffisamment grande pour créer des fuites de lignes L de champ magnétique en direction du capteur magnétique 9, comme l'illustre la figure 5. Le rapport entre l'ouverture centrale 10 et la partie non ouverte de la plaque est préférentiellement compris entre 0.4 et 0.7. Par conséquent, l'ouverture centrale 10 peut présenter un diamètre de 8 millimètres et la plaque peut présenter une longueur de 15 millimètres. Dans l'exemple, illustrée l'ouverture centrale 10 présente une forme circulaire, toutefois cet exemple n'est pas limitatif et l'ouverture centrale 10 peut présenter diverses formes.

La plaque formant la structure en matériau ferromagnétique doux 4 peut être de forme sensiblement rectangulaire et de forme allongée.

Préférentiellement, la plaque de la structure en matériau ferromagnétique doux 4 et la plaque de l'élément de support 7 sont identiques. Préférentiellement, la plaque de la structure en matériau ferromagnétique doux 4 et la plaque de l'élément de support 7 sont parallèles entre elles, en position raccrochée R (figures 3, 4 et 5).

Selon une deuxième variante de réalisation de l'invention non représentée, la structure en matériau ferromagnétique doux peut être constituée de deux plaques s'étendant dans un même plan et espacées l'une de l'autre d'un espace correspondant à la portion de guidage.

Cet espace peut valoir préférentiellement 5 millimètres. Les deux plaques peuvent préférentiellement être de forme identique et être alignées.

Dans tous les cas, la structure en matériau ferromagnétique 4 doux peut être en fer doux.

Préférentiellement, le combiné 2 peut comprendre un unique haut-parleur 5 apte et destiné à effectuer alternativement une fonction de haut-parleur de sonnerie et une fonction de haut-parleur de communication, le haut-parleur 5 étant relié électriquement audit capteur magnétique 9 par des moyens de liaison électrique 15 pour, dans la position raccrochée R du combiné 2, activer la fonction de haut-parleur de sonnerie et désactiver la fonction de haut-parleur de communication et pour, dans une position décrochée du combiné 2, désactiver la fonction de haut-parleur de sonnerie et activer la fonction de haut-parleur de communication (figures 1 et 3).

Ainsi, lorsque le capteur magnétique 9 détecte le champ magnétique provenant de l'élément aimanté de maintien 3, la fonction de haut-parleur de sonnerie du haut-parleur 5 est activée et la fonction de haut-parleur de communication du haut-parleur 5 est désactivée. Inversement, lorsque le capteur magnétique 9 ne détecte pas le champ magnétique provenant de l'élément aimanté de maintien 3, la fonction de haut-parleur de sonnerie du haut-parleur 5 est désactivée et la fonction de haut-parleur de communication du haut-parleur 5 est activée.

En fonction haut-parleur de communication, le haut-parleur 5 peut émettre des sons dont le volume est inférieur au volume du son émis en fonction haut-parleur de sonnerie.

Avantageusement, l'utilisation d'un unique haut-parleur 5 pour effectuer alternativement la fonction de haut-parleur de communication et la fonction de haut-parleur de sonnerie permet de réduire le nombre de composants électroniques de l'appareil téléphonique et donc une réduction des coûts. Par ailleurs, dans cette configuration, seul un capteur magnétique 9 est nécessaire. Il en résulte que le combiné 2 peut être remplacé à moindre coût.

Préférentiellement, les moyens de liaisons électriques 15 peuvent comprendre un câble électrique, tel qu'un cordon à spirales.

L'élément de support 7 peut comprendre des premiers moyens de fixation 11 complémentaires de deuxièmes moyens de fixation 12 faisant partie d'un boîtier 2', 2" du combiné 2 (figures 1, 3 et 4).

Les premiers moyens de fixation peuvent correspondre à l'ouverture centrale 11 de la plaque formant l'élément de support 7. Dans ce cas, les deuxièmes moyens de fixation peuvent consister en un plot 12 de forme complémentaire à l'ouverture centrale 11 et qui s'emboîte dans l'ouverture centrale 11.

Les moyens de maintien peuvent comprendre des premiers moyens de fixation amovibles 13 faisant partie du socle 1 complémentaires de deuxièmes moyens de fixation amovibles 14 faisant partie du combiné 2 pour être fixés mécaniquement entre eux en position raccrochée R (figures 1, 3 et 4).

Avantageusement, en plus d'être maintenu en position raccrochée R par attraction magnétique entre la structure aimantée de maintien 3 et la structure en matériau ferromagnétique doux 4, le combiné 2 est maintenu mécaniquement sur le socle 1, grâce aux premiers moyens de fixation amovibles 13 et aux deuxièmes moyens de fixation amovibles 14.

Préférentiellement, les premiers moyens de fixation amovibles 13 et les deuxièmes moyens de fixation amovibles 14 peuvent être des moyens d'emboîtement mâle-femelle complémentaires.

En position raccrochée R, le haut-parleur 5 peut être disposé en porte-à-faux par rapport au socle 1 (figure 3).

Avantageusement, cette configuration permet une émission audible d'un son émis par le haut-parleur 5 en fonction haut-parleur de sonnerie, quand le combiné 2 est en position raccroché R, étant donné que le haut-parleur 5 n'est pas dirigé contre le socle 1, comme l'illustre la figure 3, ce qui aurait pour conséquence d'empêcher la propagation du son. En effet, même lorsque l'appareil téléphonique est fixé à un support, par exemple à la verticale, il existe un espace entre le haut-parleur 5 et le support permettant la propagation du son en position raccrochée R. Il en résulte qu'un unique haut-parleur 5 peut être utilisé efficacement pour effectuer alternativement la fonction de haut-parleur de communication et de haut-parleur de sonnerie.

La structure aimantée de maintien 3 peut présenter une masse comprise entre 10 grammes et 20 grammes, préférentiellement égale à 15 grammes.

Avantageusement, la structure aimantée de maintien 3 réalise en plus une fonction de lest du combiné 2.

Le socle 1 peut comprendre un boîtier enveloppant la carte électronique 8 et la structure en matériau ferromagnétique doux 4. Plus particulièrement, le boîtier peut comprendre un premier élément de façade avant 16 et un élément de façade arrière 16' qui recouvrent la carte électronique 8.

La carte électronique 8 peut comprendre au moins un organe de commande 17, préférentiellement au nombre de quatre (figure 1), et dans ce cas le premier élément de façade avant 16 peut comprendre au moins un bouton 19, préférentiellement au nombre de quatre, et qui recouvre ledit au moins un organe de commande 17 (figures 1 et 2). Le bouton 19 permet d'actionner l'organe de commande 17 correspondant. Le bouton 19 peut comprendre une représentation graphique 20, tel qu'un symbole, et qui peut représenter une information symbolisant la fonction effectuée du fait de l'actionnement du bouton 19. Par exemple, le symbole peut représenter une étoile, un soleil, une cloche barrée, une clé, comme l'illustrent les figures 1 et 2.

Le bouton 19 avec le symbole 20 de l'étoile peut correspondre à une touche programmation et son actionnement peut permettre de programmer le système.

Le bouton 19 avec le symbole 20 du soleil peut correspondre à une touche éclairage et son actionnement peut permettre d'allumer un éclairage (non représenté).

Le bouton 19 avec le symbole 20 de la cloche barrée peut correspondre à une touche muet et son actionnement peut permettre de désactiver la fonction haut-parleur de sonnerie du haut-parleur 5.

Le bouton 19 avec le symbole 20 de la clé peut correspondre à une touche ouverture de la porte et son actionnement peut permettre d'actionner une gâche électrique (non représentée) d'une porte (non représentée).

L'élément de façade arrière 16' peut comprendre une fenêtre 21, de laquelle l'élément de connexion intégré à la carte électronique 8 permettant la connexion électrique au réseau électrique, peut faire saillie (figure 1).

La structure en matériau ferromagnétique doux 4 peut être intercalée entre le premier élément de façade avant 16 et un deuxième élément de façade avant 16" qui comprend les premiers moyens de fixation amovibles 13 du socle 1 (figures 1, 3 et 4).

Plus particulièrement, ces premiers moyens de fixation amovibles 13 peuvent consister en un plan incliné 13' disposé en saillie par rapport à une face externe 13" du deuxième élément de façade avant 16".

Préférentiellement, le deuxième élément de façade avant 16" peut comprendre une zone de réception 28 recevant la structure en matériau ferromagnétique doux 4. En réalité le fond de la zone de réception 28 et le plan incliné 13' peuvent être formées par une même paroi. Le premier élément de façade avant 16 et l'élément de façade arrière 16' peuvent être fixés l'un à l'autre par des moyens de fixation 22.

Une plaque de fixation 23 peut également être fixée à l'élément de façade arrière 16' pour permettre la fixation de l'appareil téléphonique au support (figure 1).

Le boîtier du combiné 2 peut comprendre une première paroi 2' et une deuxième paroi 2" formant un logement dans lequel sont disposés le haut-parleur 5 et la structure aimantée de maintien 3 (figures 1, 3 et 4). Une face externe de la première paroi 2' est destinée à venir au moins en partie contre le plan incliné 13' et la face externe 13"du boîtier du socle 1 en position raccrochée R. En particulier, la face externe de la première paroi 2' peut comprendre les deuxièmes moyens de fixation amovibles 14. Ces deuxièmes moyens de fixation amovibles 14 peuvent consister en un logement, allongé selon l'axe longitudinal du boîtier du combiné 2, et pourvu d'un fond incliné. Ce logement peut alors avantageusement être mobile en translation le long du plan incliné 13'.

La première paroi 2' peut comprendre une première zone de réception 24 recevant le haut-parleur 5, une deuxième zone de réception 25 recevant la structure aimantée de maintien 3 et une troisième zone de réception 26 recevant un microphone 27 (figure 1).

Préférentiellement, le microphone 27 est activé et/ou désactivé par le capteur magnétique 9. Ainsi, lorsque le capteur magnétique 9 détecte le champ magnétique provenant de l'élément aimanté de maintien 3, le microphone 27 est désactivé. Inversement, lorsque le capteur magnétique 9 ne détecte pas le champ magnétique provenant de l'élément aimanté de maintien 3, le microphone 27 est activé.

Le fond de la première zone de réception 24 peut être percé d'une pluralité de trous traversants 24' permettant le passage du son émis par le haut-parleur 5 (figure 1).

La première zone de réception 24, la deuxième zone de réception 25 et la troisième zone de réception 26 peuvent présenter des formes sensiblement complémentaires respectivement des formes du haut-parleur 5, de la structure aimantée de maintien 3, du microphone 27.

La deuxième zone de réception 25 peut présenter une forme complémentaire de la structure aimantée de maintien 3 et en particulier, le plot 12 peut faire saillie de la deuxième zone de réception 25. En réalité, le fond de la deuxième zone de réception 25 et le fond incliné du logement des deuxièmes moyens de fixation amovibles 14 peuvent être formées par une même paroi.

La première zone de réception 24, la deuxième zone de réception 25 et la troisième zone de réception 26 peuvent être alignées dans la direction d'un axe longitudinal de la première paroi 2'. De cette façon, le haut-parleur 5, l'élément aimanté de maintien 3 et le microphone 27 sont alignés dans la direction d'un axe longitudinal du boîtier du combiné 2.

Le premier élément de façade avant 16, le deuxième élément de façade avant 16", l'élément de façade arrière 16', la plaque de fixation 23, la première paroi 2', la deuxième paroi 2" peuvent être obtenus par moulage.

Le premier élément de façade avant 16 et le deuxième élément de façade avant 16", la première paroi 2' et la deuxième paroi 2" peuvent être en matériau polymère, tel que l'acrylonitrile styrène acrylate.

L'élément de façade arrière 16' peut être en matériau polymère, tel que l'acrylonitrile butadiène styrène.

La plaque de fixation 23 peut être en matériau polymère, tel que le nylon 6.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention telle que revendiquée.

## Revendications

1. Appareil téléphonique comprenant un socle (1), un combiné (2), et des moyens de maintien pour maintenir le combiné (2) sur le socle (1) dans une position raccrochée (R), lesdits moyens de maintien comprenant au moins une structure aimantée de maintien (3) disposée dans le combiné (2) et une structure en matériau ferromagnétique doux (4) disposée dans le socle (1), le combiné (2) comprend au moins un haut-parleur (5),
la structure aimantée de maintien (3) comprend un premier élément aimanté (6) et un deuxième élément aimanté (6'),
en position raccrochée (R), la structure en matériau ferromagnétique doux (4) est disposée en face de la structure aimantée de maintien (3) pour être attirée par la structure aimantée de maintien (3),
le socle (1) comprend une carte électronique (8) à laquelle est intégré au moins un capteur magnétique (9) pour coopérer avec la structure aimantée de maintien (3) en position raccrochée (R),
en position raccrochée (R), la structure en matériau ferromagnétique doux (4) est intercalée entre le capteur magnétique (9) et la structure aimantée de maintien (3),
l'appareil téléphonique est **caractérisé en ce que** :
le premier élément aimanté (6) et le deuxième élément aimanté (6') ont leurs pôles magnétiques (N, S) respectifs inversés, et sont fixées à une distance (d) l'un de l'autre à un élément de support (7),
et la structure en matériau ferromagnétique doux (4) comprend une portion de guidage (10) de lignes (L) de champ magnétique agencée pour guider les lignes (L) de champ magnétique provenant de la structure aimantée de maintien (3) en direction du capteur magnétique (9) en position raccrochée (R).

2. Appareil selon la revendication 1, **caractérisé en ce que** le premier élément aimanté (6) est un premier aimant permanent, **en ce que** le deuxième élément aimanté (6') est un deuxième aimant permanent, et **en ce que** l'élément de support (7) est une plaque en matériau ferromagnétique doux.

3. Appareil selon l'une quelconque des revendications 1 à 2, **caractérisé en ce qu'**en position raccrochée (R), la portion de guidage (10) et le capteur magnétique (9) sont disposés en regard l'un de l'autre.

4. Appareil selon l'une quelconque des revendications 1 à 3, **caractérisé en ce que** la structure en matériau ferromagnétique doux (4) est constituée d'une plaque munie d'une ouverture centrale (10) correspondant à la portion de guidage.

5. Appareil selon l'une quelconque des revendications 1 à 3, **caractérisé en ce que** la structure en matériau ferromagnétique doux est constituée de deux plaques s'étendant dans un même plan et espacées l'une de l'autre d'un espace correspondant à la portion de guidage.

6. Appareil selon l'une quelconque des revendications 1 à 5, **caractérisé en ce que** ledit au moins un haut-parleur (5) est un unique haut-parleur (5) apte et destiné à effectuer alternativement une fonction de haut-parleur de sonnerie et une fonction de haut-parleur de communication, le haut-parleur (5) étant relié électriquement audit capteur magnétique (9) par des moyens de liaison électrique (15) pour dans la position raccrochée (R) du combiné (2), activer la fonction de haut-parleur de sonnerie et désactiver la fonction de haut-parleur de communication et pour dans une position décrochée du combiné (2), désactiver la fonction de haut-parleur de sonnerie et activer la fonction de haut-parleur de communication.

7. Appareil selon l'une quelconque des revendications 1 à 6, **caractérisé en ce que** l'élément de support (7) comprend des premiers moyens de fixation (11) complémentaires de deuxièmes moyens de fixation (12) faisant partie d'un boîtier (2', 2") du combiné (2).

8. Appareil selon l'une quelconque des revendications 1 à 7, **caractérisé en ce que** les moyens de maintien comprennent des premiers moyens de fixation amovibles (13) faisant partie du socle (1) complémentaires de deuxièmes moyens de fixation amovibles (14) faisant partie du combiné (2) agencés pour être fixés mécaniquement entre eux en position raccrochée (R).

9. Appareil selon l'une quelconque des revendications 1 à 8, **caractérisé en ce qu'**en position raccrochée (R), le haut-parleur (5) est disposé en porte-à-faux par rapport au socle (1).

10. Appareil selon l'une quelconque des revendications 1 à 9, **caractérisé en ce que** la structure aimantée de maintien (3) présente une masse comprise entre 10 grammes et 20 grammes, préférentiellement égale à 15 grammes.

## Patentansprüche

1. Telefonvorrichtung, umfassend eine Basis (1), ein Mobilteil (2) und Haltemittel zum Halten des Mobilteils (2) auf der Basis (1) in einer Auflegeposition (R),
wobei die Haltemittel mindestens eine magnetische Haltestruktur (3), die im Mobilteil (2) angeordnet ist, und eine Struktur aus weichem ferromagnetischem Material (4), die in der Basis (1) angeordnet ist, umfassen,
wobei das Mobilteil (2) mindestens einen Lautsprecher (5) aufweist,
die magnetische Haltestruktur (3) ein erstes Magnetelement (6) und ein zweites Magnetelement (6') umfasst,
in der Auflegeposition (R) die Struktur aus weichem ferromagnetischem Material (4) gegenüber der Haftmagnetstruktur (3) angeordnet ist, die von der magnetischen Haltestruktur(3) angezogen wird,
die Basis (1) eine elektronische Platine (8) umfasst, auf der mindestens ein Magnetsensor (9) integriert ist, um mit der magnetischen Haltestruktur (3) in der Auflegeposition (R) zusammenzuwirken,
in der Auflegeposition (R) die Struktur aus weichem ferromagnetischem Material (4) zwischen dem Magnetsensor (9) und der magnetische Haltestruktur (3) eingesetzt ist, wobei die Telefonvorrichtung **dadurch gekennzeichnet ist, dass**:
das erste Magnetelement (6) und das zweite Magnetelement (6') ihre jeweiligen Magnetpole (N, S) invertiert aufweisen und in einem Abstand (d) voneinander an einem Trägerelement (7) befestigt sind,
und die Struktur aus weichem ferromagnetischem Material (4) einen Führungsabschnitt (10) aus Magnetfeldlinien (L) umfasst, der angeordnet ist, um die Magnetfeldlinien (L) von der magnetischen Haltestruktur (3) zum Magnetsensor (9) in der Auflegeposition (R) zu führen.

2. Vorrichtung nach Anspruch 1,
**dadurch gekennzeichnet, dass** das erste Magnetelement (6) ein erster Permanentmagnet ist,
dass das zweite Magnetelement (6') ein zweiter Permanentmagnet ist,
und dass das Trägerelement (7) eine Platte aus weichem ferromagnetischem Material ist.

3. Vorrichtung nach einem der Ansprüche 1 bis 2,
**dadurch gekennzeichnet, dass** in der Auflegeposition (R) der Führungsabschnitt (10) und der Magnetsensor (9) einander gegenüberliegend angeordnet sind.

4. Vorrichtung nach einem der Ansprüche 1 bis 3,
**dadurch gekennzeichnet, dass** die Struktur aus weichem ferromagnetischem Material (4) aus einer Platte besteht, die mit einer zentralen Öffnung (10) versehen ist, die dem Führungsabschnitt entspricht.

5. Vorrichtung nach einem der Ansprüche 1 bis 3,
**dadurch gekennzeichnet, dass** die Struktur aus weichem ferromagnetischem Material aus zwei Platten besteht, die sich in der gleichen Ebene erstrecken und durch einen dem Führungsabschnitt entsprechenden Raum voneinander beabstandet sind.

6. Vorrichtung nach einem der Ansprüche 1 bis 5,
**dadurch gekennzeichnet, dass** der mindestens eine Lautsprecher (5) ein einzelner Lautsprecher (5) ist, der geeignet und dazu bestimmt ist, abwechselnd eine Ruftonlautsprecherfunktion und eine Kommunikationslautsprecherfunktion auszuführen,
wobei der Lautsprecher (5) mit dem Magnetsensor (9) durch elektrische Verbindungsmittel (15) des Mobilteils (2) elektrisch verbunden ist, um in der Auflegeposition (R)
die Ruftonlautsprecherfunktion zu aktivieren und die Kommunikationslautsprecherfunktion zu deaktivieren, und um in einer Abnahmeposition des Mobilteils (2),
die Ruftonlautsprecherfunktion zu deaktivieren und die Kommunikationslautsprecherfunktion zu aktivieren.

7. Vorrichtung nach einem der Ansprüche 1 bis 6,
**dadurch gekennzeichnet, dass** das Trägerelement (7) erste Befestigungsmittel (11) umfasst, die komplementär zu zweiten Befestigungsmitteln (12) sind, die Teil eines Gehäuses (2', 2") des Mobilteils (2) sind.

8. Vorrichtung nach einem der Ansprüche 1 bis 7,
**dadurch gekennzeichnet, dass** die Haltemittel erste abnehmbare Befestigungsmittel (13) umfassen, die einen Teil der Basis (1) komplementär zu zweiten abnehmbaren Befestigungsmitteln (14) bilden, die einen Teil des Mobilteils (2) bilden, der so angeordnet ist, dass er in der Auflegeposition (R) mechanisch zwischen ihnen befestigt wird.

9. Vorrichtung nach einem der Ansprüche 1 bis 8,
**dadurch gekennzeichnet, dass** der Lautsprecher (5) in der Auflegeposition (R) in einer freitragenden Position in Bezug auf die Basis (1) angeordnet ist.

10. Vorrichtung nach einem der Ansprüche 1 bis 9,
**dadurch gekennzeichnet, dass** die magnetische Haltestruktur (3) eine Masse zwischen 10 Gramm und 20 Gramm, vorzugsweise 15 Gramm aufweist.

## Claims

1. A telephone device comprising a base (1), a handset (2), and retaining means for retaining the handset (2) on the base (1) in an on-hook position (R), said retaining means comprising at least one magnetized retaining structure (3) disposed on the handset (2) and a structure made of soft ferromagnetic material (4) disposed in the base (1), the handset (2) comprises at least one speaker (5),
the magnetized retaining structure (3) comprises a first magnetized element (6) and a second magnetized element (6'),
in on-hook position (R), the structure made of soft ferromagnetic material (4) is disposed facing the magnetized retaining structure (3) so as to be attracted by the magnetized retaining structure (3),
the base (1) comprises a circuit board (8) to which is integrated at least one magnetic sensor (9) for cooperating with the magnetized retaining structure (3) in on-hook position (R),
in on-hook position (R), the structure made of soft ferromagnetic material (4) is intercalated between the magnetic sensor (9) and the magnetized retaining structure (3),
the telephone device is **characterized in that**:
the first magnetized element (6) and the second magnetized element (6') have their respective magnetic poles (N, S) inverted, and are fixed at a distance (d) from one another to a support element (7),
and the structure made of soft ferromagnetic material (4) comprises a magnetic field line (L) guiding portion (10) arranged for guiding the magnetic field lines (L) originating from the magnetized retaining structure (3) in the direction of the magnetic sensor (9) in on-hook position (R).

2. A device according to Claim 1, **characterized in that** the first magnetized element (6) is a first permanent magnet, **in that** the second magnetized element (6') is a second permanent magnet, and **in that** the support element (7) is a plate made of soft ferromagnetic material.

3. A device according to any one of Claims 1 to 2, **characterized in that** in on-hook position (R), the guiding portion (10) and the magnetic sensor (9) are disposed facing one another.

4. A device according to any one of Claims 1 to 3, **characterized in that** the structure made of soft ferromagnetic material (4) is constituted by a plate provided with a central opening (10) corresponding to the guiding portion.

5. A device according to any one of Claims 1 to 3, **characterized in that** the structure made of soft ferromagnetic material is constituted by two plates extending in the same plane and spaced apart from one another by a space corresponding to the guiding portion.

6. A device according to any one of Claims 1 to 5, **characterized in that** said at least one speaker (5) is a single speaker (5) able and intended to alternatively carry out a ringing speaker function and a communication speaker function, the speaker (5) being connected electrically to said magnetic sensor (9) by electric connection means (15) for activating, in the on-hook position (R) of the handset (2), the ringing speaker function and for deactivating the communication speaker function, and for deactivating, in an off-hook position of the handset (2), the ringing speaker function and for activating the communication speaker function.

7. A device according to any one of Claims 1 to 6, **characterized in that** the support element (7) comprises first attachment means (11) which are complementary to second attachment means (12) forming part of a casing (2', 2") of the handset (2).

8. A device according to any one of Claims 1 to 7, **characterized in that** the retaining means include first removable attachment means (13) forming part of the base (1) which are complementary to second removable attachment means (14) forming part of the handset (2) arranged to be fixed mechanically with each other in on-hook position (R).

9. A device according to any one of Claims 1 to 8, **characterized in that** in on-hook position (R), the speaker (5) is disposed overhanging with respect to the base (1).

10. A device according to any one of Claims 1 to 9, **characterized in that** the magnetized retaining structure (3) has a mass comprised between 10 grams and 20 grams, preferably equal to 15 grams.
